# EUROPÄISCHE PATENTSCHRIFT

(11) **EP 2 822 809 B1**
(45) Veröffentlichungstag und Bekanntmachung des Hinweises auf die Patenterteilung: **17.04.2019**
(21) Anmeldenummer: 13710808.0
(22) Anmeldetag: 07.03.2013
(51) Int. Cl.: B60N 3/00, B60N 2/22

(54) **AUSSTATTUNGSTEIL FÜR EINEN FAHRZEUGSITZ UND FAHRZEUGSITZ**
FITTING PART FOR A VEHICLE SEAT, AND A VEHICLE SEAT
PIÈCE D'ÉQUIPEMENT POUR SIÈGE DE VÉHICULE ET SIÈGE DE VÉHICULE

(30) Priorität: 07.03.2012 DE 102012004342
(43) Veröffentlichungstag der Anmeldung: 14.01.2015
(73) Patentinhaber: Adient Luxembourg Holding S.à r.l., 1855 Luxembourg (LU)
(72) Erfinder: EVELS, Sebastian, 42369 Wuppertal (DE); LEBER, Marco, 53757 Sankt Augustin (DE); RAPPEN, Ralf, 51381Leverkusen (DE); GERHARDT, Frank, 51143 Köln (DE); OUALKADI, Ahmed, 42551 Velbert (DE)
(74) Vertreter: Loock, Jan Pieter
(86) Internationale Anmeldenummer: PCT/EP2013/054655
(87) Internationale Veröffentlichungsnummer: WO 2013/132027

(56) Entgegenhaltungen:
- DE-U1- 29 707 389
- US-A- 2 173 569
- US-A- 2 798 780

## Beschreibung

### Stand der Technik

Die Erfindung geht aus von einem Ausstattungsteil für einen Fahrzeugsitz gemäß dem Oberbegriff des Anspruchs 1. Beispielsweise offenbart die US 2,173,569 A einen Tisch für Automobile. Solche Ausstattungsteile sind aus dem Stand der Technik allgemein bekannt und finden beispielsweise zur Bereitstellung einer aufklappbaren Tischfläche an der Rückseite einer Fahrzeugsitzrückenlehne Verwendung. Das Ausstattungsteil umfasst hierfür ein plattenförmig ausgebildetes Klappelement, welches zwischen einer Nichtgebrauchsposition und einer Gebrauchsposition verschwenkt werden kann. In der Nichtgebrauchsposition ist das Klappelement parallel zur Rückenlehne angeordnet, so dass der Sitzraum für einen auf einer nachfolgenden Rücksitzbank sitzenden Fahrzeuginsassen nicht eingeschränkt wird. Der Fahrzeuginsasse kann das Klappelement von der Nichtgebrauchsposition in eine im Wesentlichen horizontale Gebrauchsposition überführen, in welcher das Klappelement als Tischfläche für den Fahrzeuginsassen dient. In der Gebrauchsposition wird das Klappelement mittels eines Halteelements fixiert, so dass ein ungewolltes Zurückklappen des Klappelements in die Nichtgebrauchsposition infolge einer auf das Klappelement wirkenden Gewichtskraft verhindert wird.

Nachteilig an solchen Ausstattungsteilen ist, dass eine horizontale Ausrichtung des Klappelements nur dann gewährleistet werden kann, wenn die Rückenlehne einen genau definierten Neigungswinkel relativ zur Horizontalen aufweist. Eine Verstellung der Rückenlehnenneigung, beispielsweise zur Komfortverstellung für einen auf diesem Fahrzeugsitz sitzenden weiteren Fahrzeuginsassen, führt dazu, dass das Klappelement nicht mehr horizontal ausgerichtet werden kann.

Zur Vermeidung dieses Problems sind aus dem Stand der Technik Ausstattungsteile bekannt, welche nicht unmittelbar an der Rückenlehne befestigt sind, sondern stattdessen an zusätzlichen Trägerelementen schwenkbar befestigt sind, welche auf beiden Seiten des Fahrzeugsitzes jeweils starr mit einem Sitzteil des Fahrzeugsitzes verbunden sind. Eine solche Konstruktion ist vergleichsweise aufwändig und kostenintensiv.

### Offenbarung der Erfindung

Es ist daher eine Aufgabe der vorliegenden Erfindung ein Ausstattungsteil für einen Fahrzeugsitz zur Verfügung zu stellen, welches in seiner Gebrauchsposition stets in einer im Wesentlichen horizontalen Stellung arretiert werden kann und vergleichsweise bauraumkompakt, einfach und kostengünstig zu realisieren ist.

Gelöst wird diese Aufgabe mit einem Ausstattungsteil für einen Fahrzeugsitz gemäß Anspruch 1 oder gemäß Anspruch 3.

In vorteilhafter Weise ist der Schieber in verschiedenen Lagen relativ zur Schienenanordnung fixierbar, so dass hierdurch das Halteelement in verschiedenen Winkeln relativ zum Klappelement steht und das Klappelement somit in verschiedenen Gebrauchspositionen durch das Halteelement gehalten werden kann. Durch die Mehrzahl von einstellbaren Gebrauchspositionen ist der Fahrzeuginsasse nun auch bei unterschiedlichen Neigungswinkeln der Rückenlehne stets in der Lage, eine Arretierposition zu finden, in welcher das Klappelement nahezu horizontal ausgerichtet ist. Gleichzeitig wird ein vergleichsweise einfacher und kostengünstig zu realisierender Aufbau des Ausstattungsteils verwirklicht. Das Klappelement umfasst vorzugsweise eine Tischplatte.

Vorteilhafte Ausgestaltungen und Weiterbildungen der Erfindung sind den Unteransprüchen, sowie der Beschreibung unter Bezugnahme auf die Zeichnungen entnehmbar.

Gemäß der vorliegenden Erfindung ist vorgesehen, dass die Mehrzahl von Befestigungselementen eine Mehrzahl von Rasten umfassen, wobei eine jede Raste zum Verrasten mit dem Schieber in einer der Mehrzahl von Gebrauchspositionen vorgesehen ist. Vorzugsweise sind die Rasten an einer der Schienenanordnung zugewandten Seite des Klappelements ausgebildet, wobei die Rasten insbesondere entlang einer Haupterstreckungsrichtung der Schienenanordnung aufgereiht sind. Der Schieber weist wenigstens ein dem Klappelement zugewandtes Gegenrastelement auf, welches zum wahlweisen Verrasten mit einer der Rasten konfiguriert ist. Vorteilhafterweise sind die Rasten derart ausgerichtet, dass der Schieber bzw. das Gegenrastelement die Rasten ungehindert passieren kann, wenn das Klappelement von der Nichtgebrauchsposition in die Gebrauchsposition bewegt wird, während der in Gegenrichtung bewegte Schieber, wenn das Klappelement von der Gebrauchsposition in die Nichtgebrauchsposition bewegt werden soll, die Rasten nur dann passieren kann, wenn das Klappelement von dem Benutzer mit einer erhöhten Kraft in Richtung der Nichtgebrauchsposition beaufschlagt wird. Diese erhöhte Kraft, welche zum Wegklappen des Klappelements vom Benutzer aufgewendet werden muss, ist insbesondere deutlich größer, als diejenigen Kräfte, die auf das in der Gebrauchsposition befindliche Klappelement während einer "normalen" Gebrauchssituation typischerweise wirken. Denkbar ist, dass das Gegenrastelement hierfür eine gewisse Elastizität aufweist. Alternativ wäre aber auch denkbar, dass die Rasten derart ausgerichtet sind, dass der Schieber bzw. das Gegenrastelement die Rasten ungehindert passieren kann, wenn das Klappelement von der Nichtgebrauchsposition in die Gebrauchsposition bewegt wird, während der in Gegenrichtung bewegte Schieber, wenn das Klappelement in der Gebrauchsposition in Richtung der Nichtgebrauchsposition kraftbeaufschlagt wird, die Rasten nur dann passieren kann, wenn das Halteelement durch den Fahrzeuginsassen leicht angehoben wird, so dass das wenigstens eine Gegenrastelement außer Eingriff mit den Rastelementen gelangen und somit über die Rasten hinweg bewegt werden kann. Durch entsprechendes Kraftbeaufschlagen des Klappelements und/oder Anheben bzw. Loslassen des Halteelements kann der Fahrzeuginsasse nun eine beliebige Winkelstellung des Klappelements relativ zur Rückenlehne aufsuchen (der Fahrzeuginsasse wird diejenige Stellung aufsuchen, in welcher das Klappelement nahezu horizontal ausgerichtet ist), in welcher das Gegenrastelement mit einem entsprechenden Rastelement dann verrastet.

Gemäß der vorliegenden Erfindung ist vorgesehen, dass wenigstens eine erste Raste und eine zweite Raste entlang einer zur Haupterstreckungsrichtung senkrechten Querrichtung zueinander versetzt sind und wobei der Schieber wenigstens ein erstes Gegenrastelement und ein zweites Gegenrastelement aufweist, welche entlang der Querrichtung zueinander versetzt sind, wobei die erste und die zweite Raste und/oder das erste und das zweite Gegenrastelement entlang der Haupterstreckungsrichtung zueinander versetzt sind. In vorteilhafter Weise können somit verschiedene Rastpositionen bereitgestellt werden, die näher aneinander liegen und weniger weit voneinander beabstandet sind, um auch kleine Winkelkorrekturen in der Ausrichtung des Klappelements durchführen zu können. Insbesondere müssen die Rastelemente nicht wenigstens eine Rastelementbreite voneinander entfernt liegen, da sie sich in Querrichtung überlappen können. Denkbar ist auch, dass sich die Gegenrastelemente in Querrichtung gegenseitig überlappen.

Eine weitere Ausführungsform oder ein weiterer Gegenstand der vorliegenden Erfindung ist ein Ausstattungsteil für einen Fahrzeugsitz aufweisend ein an einer Rückenlehne des Fahrzeugsitzes drehbar befestigtes Klappelement, welches zwischen einer im Wesentlichen horizontalen Gebrauchsposition und einer Nichtgebrauchsposition verschwenkbar ist, und ein Halteelement zur Arretierung des Klappelements in der Gebrauchsposition, wobei ein erster Bereich des Halteelements drehbar an der Rückenlehne befestigt ist und wobei ein zweiter Bereich des Halteelements drehbar an einem Schieber befestigt ist, welcher in einer Schienenanordnung des Klappelements verschiebbar gelagert ist und mittels eines Befestigungselements relativ zur Schienenanordnung fixierbar ist, wobei der Schieber eine Funktionskurve aufweist, in welcher der zweite Bereich des Halteelements derart geführt ist, dass in der Gebrauchsposition der zweite Bereich in wenigstens zwei verschiedenen Positionen relativ zum Schieber fixierbar ist.

In vorteilhafter Weise kann das Klappelement somit auch in wenigstens zwei verschiedenen Gebrauchspositionen arretiert werden, so dass eine Anpassung der Ausrichtung des Klappelements in Bezug auf den Neigungswinkel der Rückenlehne ermöglicht wird. Insbesondere wird durch die als Steuerkurve ausgebildete Funktionskurve eine Anpassung in besonders kleinen Winkelbereichen ermöglicht. Die Schienenanordnung weist vorzugsweise eine sich entlang der Haupterstreckungsrichtung erstreckende Langlochführung auf, in welcher ein Führungsbolzen des Schiebers und/oder das mit dem Schieber verbundene Halteelement verschiebbar geführt ist, wobei die Langlochführung in einem Endbereich wenigstens eine in Richtung der Rückenlehne gerichtete Aussparung zur Ausbildung der Funktionskurve aufweist. In der Gebrauchsposition verrastet das Gegenrastelement des Schiebers mit einer Raste des Klappelements, wobei der zweite Bereich entweder am Ende der Langlochführung oder in der Aussparung fixiert werden kann, um unterschiedliche Ausrichtungen des Klappelements einzustellen. Die Funktionskurve ist insbesondere derart ausgebildet, dass bei einem Überführung des Klappelements von der Nichtgebrauchsposition in die Gebrauchsposition der Bolzen zunächst in die Aussparung verfährt und verbleibt. Wenn der Fahrzeuginsasse das Klappelement nun kurz anhebt wird der Bolzen von der Aussparung in den Endbereich des Langloches verschoben und verbleibt dort. Denkbar ist, dass der Schiebe eine Vielzahl von weiteren Aussparungen aufweist, um weitere Winkelstellungen des Klappelements zu ermöglichen.

Gemäß einer bevorzugten Ausführungsform der vorliegenden Erfindung ist vorgesehen, dass die Schienenanordnung eine weitere Funktionskurve umfasst, welche im Wesentlichen deckungsgleich mit der Funktionskurve angeordnet ist, wenn der Schieber eine Funktionsstellung relativ zur Schienenanordnung eingenommen hat, wobei in der Funktionsstellung vorzugsweise eine Raste des Klappelements mit einem Gegenrastelement des Schiebers verrastet ist und das Klappelement im Wesentlichen horizontal angeordnet ist. Vorzugsweise sind die Funktionskurve und die weitere Funktionskurve im Wesentlichen gleich ausgebildet, so dass eine möglichst stabile Anbindung des Bolzens sowohl an den Schieber, als auch an die Schienenanordnung erfolgt.

Ein weiterer Gegenstand der vorliegenden Erfindung ist ein Fahrzeugsitz aufweisend ein erfindungsgemäßes Ausstattungsteil.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines Ausstattungsteils gemäß einer beispielhaften ersten Ausführungsform der vorliegenden Erfindung.
- **Figuren 2a, 2b, 2c**: zeigen schematische Ansichten des Ausstattungsteils gemäß der beispielhaften ersten Ausführungsform der vorliegenden Erfindung in einer ersten Gebrauchsposition.
- **Figuren 3a, 3b, 3c**: zeigen schematische Ansichten des Ausstattungsteils gemäß der beispielhaften ersten Ausführungsform der vorliegenden Erfindung in einer zweiten Gebrauchsposition.
- **Figuren 4a, 4b, 4c**: zeigen eine schematische Ansichten eines Ausstattungsteils gemäß einer beispielhaften zweiten Ausführungsform der vorliegenden Erfindung.
- **Figuren 5a, 5b, 5c**: zeigen eine schematische Ansichten eines Ausstattungsteils gemäß einer beispielhaften dritten Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

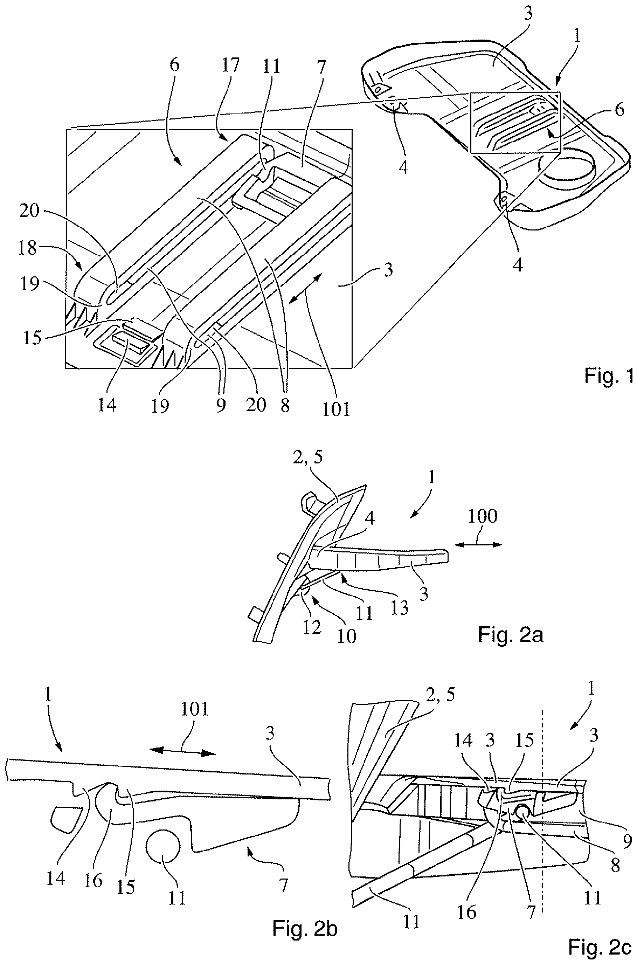

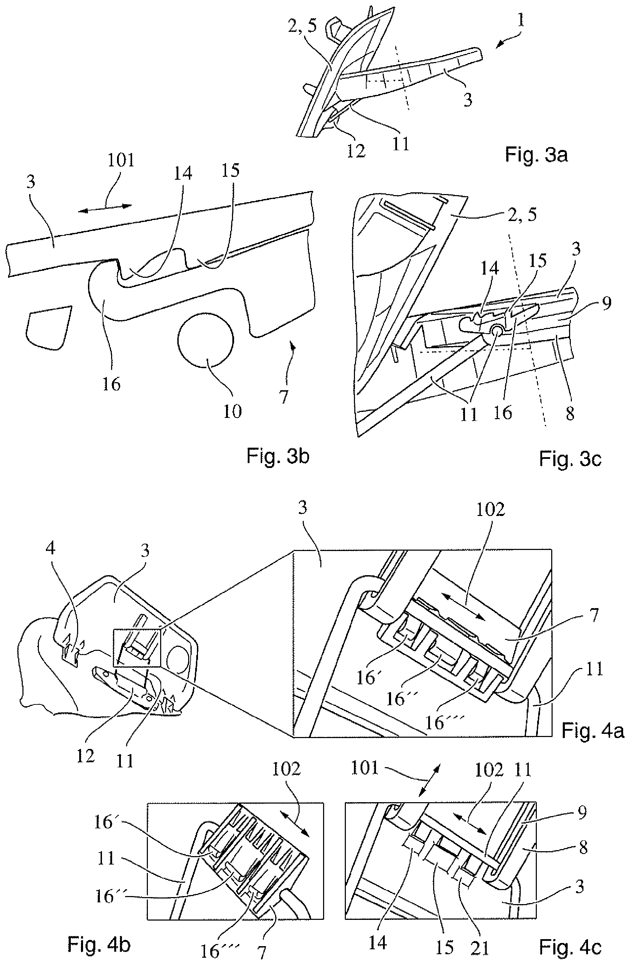

In **Figur 1** sind eine schematische Ansicht und eine Detailansicht eines Ausstattungsteils 1 für einen Fahrzeugsitz 2 gemäß einer beispielhaften ersten Ausführungsform der vorliegenden Erfindung dargestellt. Das Ausstattungsteil 1 umfasst ein Klappelement 3, welches mittels zweier Scharniere 4 drehbar an einer Rückenlehne 5 des Fahrzeugsitzes 2 zu befestigen ist. Das Klappelement 3 über die Scharniere 4 zwischen einer Nichtgebrauchsposition und zweier verschiedener Gebrauchspositionen (dargestellt jeweils in Figuren 2a und 3a) verschwenkbar. In der Nichtgebrauchsposition liegt das Klappelement 3 parallel zur Rückenlehne 5 an der Rückenlehne 5 an, während das Klappelement 3 in den Gebrauchspositionen von der Rückenlehne 5 entlang einer im Wesentlichen horizontalen Ebene 100 absteht. In der Gebrauchsposition fungiert das Klappelement 3 als Tischfläche für einen hinter dem Fahrzeugsitz, beispielsweise auf einer Rücksitzbank sitzenden Fahrzeuginsassen (nicht dargestellt).

In den Gebrauchspositionen wird das Klappelement 3 von einem Halteelement 11 abgestützt. Ein erster Bereich 10 des Halteelements 11 ist seinerseits über ein Gelenk 12 drehbar an der Rückenlehne 5 befestigt, wobei die Drehachse des Gelenks 12 und die Drehachse der Scharniere 4 entlang der Rückenlehne 5 voneinander beabstandet sind. Ein zweiter Bereich 13 des Halteelements 11 ist drehbar an einem Schieber 7 befestigt. Das Halteelement 11 ist insbesondere als Federelement in Form eines Drahtbügels ausgeführt. Das Klappelement 3 weist auf seiner Unterseite eine Schienenanordnung 6 auf, in welcher der Schieber 7 entlang einer Haupterstreckungsrichtung 101 längsverschiebbar geführt ist. Die Schienenanordnung 6 umfasst zwei zueinander parallel verlaufende Wandelemente 8, in welchen jeweils ein Führungslangloch 9 ausgebildet ist. In den Führungslanglöchern 9 ist das Halteelement 11 verschiebbar geführt, wobei der zweite Bereich 13 des Halteelements 11 zwischen den Wandelementen 8 angeordnet ist und durch einen im Schieber 7 ausgebildeten Durchgangskanal verläuft. Der Schieber 7 ist über das Halteelement 11 in der Schienenanordnung 6 verschiebbar gelagert, wobei das Halteelement 11 sowohl gegenüber der Schienenanordnung 6, als auch gegenüber dem Schieber 7 drehbar ist. An der Unterseite des Klappelements 3 sind zwischen den Wandelementen 8 zwei Rasten, eine erste Raste 14 und eine zweite Raste 15, angeordnet. Der Schieber 7 weist auf seiner dem Klappelement 3 zugewandten Seite ein komplementäres Gegenrastelement 16 (in Figur 1 aus perspektivischen Gründen nicht zu sehen) auf, welches mit einer der beiden Rasten 14, 15 eine Rastverbindung zur Arretierung des Klappelements 3 in den Gebrauchspositionen (dargestellt in Figuren 2b und 3b) eingehen kann.

In der Nichtgebrauchsposition ist der Schieber 7 in Richtung eines ersten Endes 17 der Schienenanordnung 6 verfahren. Das Halteelement 11 ist dann im Wesentlichen parallel zum Klappelement 3 ausgerichtet. Wenn ein Fahrzeuginsasse das Klappelement 3 nun als Tisch verwenden möchte, schwenkt der Fahrzeuginsasse das Klappelement 3 von der Nichtgebrauchsposition in Richtung der Gebrauchsposition, in welcher das Klappelement 3 von der Rückenlehne 5 absteht. Aufgrund des Abstandes zwischen den Scharnieren 4 und dem Gelenk 12 wird dabei der zweite Bereich 13 des Halteelements 11 relativ zum Klappelement 3 in Richtung Rückenlehne 5 zurück gezogen. Hierdurch wird der Schieber 7 entlang der Haupterstreckungsrichtung 101 vom ersten Ende 17 der Schienenanordnung 6 in Richtung eines zweiten Endes 18 verfahren. Im Bereich des zweiten Endes 18 sind die beiden Rasten 14, 15 angeordnet. Der Schieber 7 wird über die Rasten 14, 15 geschoben, so dass das Gegenrastelement 16 zumindest über die zweite Raste 15 oder über beide Rasten 14, 15 rutscht.

Wenn der Fahrzeuginsasse das Klappelement 6 nun loslässt, gelangt das Gegenrastelement 16 entweder mit der ersten Raste 14 oder mit der zweiten Raste 15 in Eingriff. Die Rasten 14, 15 sind derart haifischzahnartig ausgebildet, dass ein Verrasten lediglich bei einer Kraftbeaufschlagung des Gegenrastelemente 16 in Richtung des ersten Endes 17 erfolgt, während die Rasten 14, 15 bei einer Bewegung des Gegenrastelements 16 vom ersten Ende 17 in Richtung des zweiten Endes 18 ungehindert passiert werden können. Durch den Zeitpunkt des Loslassens kann der Fahrzeuginsasse bestimmen, ob das Gegenrastelement 16 mit der ersten Raste 14 oder mit der zweiten Raste 15 in Eingriff gelangen soll. Das Klappelement 3 wird dann über die Verbindung zwischen einer der beiden Rasten 14, 15 mit dem Gegenrastelement 16 von dem Halteelement 11 gestützt. Das Klappelement 3 kann nun belastet werden und fungiert als Tischfläche. Wenn das Klappelement 3 zurück in die Nichtgebrauchsposition verfahren werden soll, muss der Fahrzeuginsasse das Klappelement 3 mit einer erhöhten Kraft in Richtung der Nichtgebrauchsposition drücken, so dass der Schieber 7 bis zu den Endanschlägen 19 der Führungslanglöcher 9 verfährt. Die Führungslanglöcher 9 weisen im Bereich der Endanschläge 19 an Art Rampenbereich 20 auf, wodurch der Schieber 7 von der Unterseite des Klappelements 3 ein Stück weit entfernt wird. Der Bügelbereich des Halteelements 11 rutscht dabei an den Rasten 14, 15 abgewandten Führungsflächen der Führungslanglöcher 9 entlang.

In gleicher Weise kann der Fahrzeuginsasse auch steuern, ob das Gegenrastelement 16 mit der ersten Raste 14 oder mit der zweiten Raste 15 in Eingriff gelangen soll. So kann durch ein mit Kraft durchgeführtes Absenken des Klappelements 6 durch den Benutzer das Gegenrastelement 16 außer Eingriff mit der ersten Raste 14 und in Eingriff mit der zweiten Raste 15 gebracht werden. Umgekehrt reicht ein kurzes Anheben des Klappelements 6, um das Gegenrastelement 16 außer Eingriff mit der zweiten Raste 15 und in Eingriff mit der ersten Raste 14 zu bringen. Die beiden Rasten 14, 15 sind entlang der Haupterstreckungsrichtung 101 hintereinander angeordnet, so dass vorteilhafterweise durch die Wahl der entsprechenden Raste 14, 15 die Ausrichtung des Klappelements 3 relativ zur Horizontalen eingestellt werden kann. Vorzugsweise weist das Ausstattungsteil 1 eine Vielzahl derartiger Rasten 14, 15 auf, welche entlang der Haupterstreckungsrichtung 101 zwischen den Wandelementen 8 aufgereiht sind, so dass der Fahrzeuginsasse immer eine Rastposition zwischen dem Gegenrastelement 16 und einer Raste findet, in welcher das Klappelement 3 stets im Wesentlichen horizontal ausgerichtet ist, ohne dass hierfür die Neigung der Rückenlehne 5 angepasst werden müsste. Die Neigung der Rückenlehne 5 kann somit zur Komfortverstellung frei gewählt werden, wobei gleichzeitig eine horizontale Ausrichtung des Klappelements 3 möglich ist.

Das Ausstattungsteil 1 ist insbesondere Teil des Fahrzeugsitzes 2 für ein Kraftfahrzeug (nicht abgebildet).

In **Figuren 2a, 2b und 2c** sind schematische Ansichten des beschriebenen Ausstattungsteils 1 in einer ersten Gebrauchsposition dargestellt. In dieser ersten Gebrauchsposition ist das Gegenastelement 16 mit der zweiten Raste 15 verrastet. Dieser Umstand ist insbesondere in Figur 2b deutlich zu erkennen. Das Klappelement 3 ist demnach in einen bestimmten Winkel relativ zur Rückenlehne 5 fixiert.

In **Figuren 3a, 3b und 3c** sind schematische Ansichten des beschriebenen Ausstattungsteils 1 in einer zweiten Gebrauchsposition dargestellt. In dieser zweiten Gebrauchsposition ist das Gegenastelement 16 mit der ersten Raste 15 verrastet. Das Klappelement 3 ist demnach wiederum in einen bestimmten Winkel relativ zur Rückenlehne 5 fixiert, wobei der Winkel in der zweiten Gebrauchsposition vom Winkel in der ersten Gebrauchsposition abweicht, so dass je nach Neigung der Rückenlehne 5 der Winkel zwischen dem Klappelement 3 und der Rückenlehne 5 variiert werden kann, um immer eine im Wesentlichen horizontale Ausrichtung des Klappelements 3 zu finden.

In **Figuren 4a, 4b und 4c** sind schematische Ansichten eines Ausstattungsteils 1 gemäß einer beispielhaften zweiten Ausführungsform der vorliegenden Erfindung dargestellt. Die zweite Ausführungsform gleicht im Wesentlichen der ersten Ausführungsform, wobei im Unterschied das Ausstattungsteil 1 gemäß der zweiten Ausführungsform eine Mehrzahl von Gegenrastelementen 16, hier ein erstes Gegenrastelement 16', ein zweites Gegenrastelement 16" und ein drittes Gegenrastelement 16''', umfasst. Die drei Gegenrastelemente 16', 16", 16''' sind entlang einer Querrichtung 102, die senkrecht zur Haupterstreckungsrichtung 101 und parallel zum Klappelement 3 verläuft, nebeneinander angeordnet. Das Klappelement 3 weist ferner eine Mehrzahl von Rasten, eine erste Raste 14, eine zweite Raste 15 und eine dritte Raste 21 auf, welche ebenfalls entlang einer zur Querrichtung 102 parallelen Richtung teilweise nebeneinander bzw. sich gegenseitig überlappend angeordnet sind. Die erste Raste 14 ist entlang der Querrichtung 102 auf der Höhe des ersten Gegenrastelements 16', die zweite Raste 15 auf der Höhe des zweiten Gegenrastelements 16" und die dritte Raste 21 auf der Höhe des dritten Gegenrastelements 16''' angeordnet. Im Unterschied zur den Gegenrastelementen 16', 16", 16''' sind die Rasten 14, 15 und 21 entlang der Haupterstreckungsrichtung 101 zumindest geringfügig gegeneinander versetzt angeordnet. In Figur 4c ist zur Illustration der Rasten 14, 15 und 21 der Schieber 7 nicht dargestellt.

In einer ersten Gebrauchsposition ist nun die erste Raste 14 mit dem ersten Gegenrastelement 16' in Eingriff, während aufgrund des Versatzes zwischen den Rasten 14, 15, 21 die zweite Raste 15 außer Eingriff mit dem zweiten Gegenrastelement 16" und die dritte Raste 21 außer Eingriff mit dem dritten Gegenrastelement 16''' ist. In einer zweiten Gebrauchsposition ist nun die zweite Raste 15 mit dem zweiten Gegenrastelement 16" in Eingriff, während aufgrund des Versatzes zwischen den Rasten 14, 15, 21 die erste Raste 14 außer Eingriff mit dem ersten Gegenrastelement 16' und die dritte Raste 21 außer Eingriff mit dem dritten Gegenrastelement 16''' ist. Analog ist in einer dritten Gebrauchsposition die dritte Raste 21 mit dem dritten Gegenrastelement 16''' in Eingriff, während aufgrund des Versatzes zwischen den Rasten 14, 15, 21 die erste Raste 14 außer Eingriff mit dem ersten Gegenrastelement 16' und die zweite Raste 15 außer Eingriff mit dem zweiten Gegenrastelement 16" ist. Da die Rasten 14, 15, 21 entlang der Querrichtung 102 gegeneinander versetzt sind, kann ein im Vergleich zur ersten Ausführungsform geringerer Versatz entlang der Haupterstreckungsrichtung 101 zwischen den Rasten 14, 15, 21 realisiert werden. Die erste, zweite und dritte Gebrauchsposition liegen daher näher beieinander, so dass eine vergleichsweise feine Winkelkorrektur der Ausrichtung des Klappelements 3 möglich ist. Die Winkelabweichung zwischen der ersten, zweiten und dritten Gebrauchsposition liegen hierfür sehr nah beieinander. Denkbar ist, dass das Ausstattungsteil eine Mehrzahl solcher Anordnungen aus ersten, zweiten und dritten Rasten 14, 15, 21 aufweist, welche entlang der Haupterstreckungsrichtung 101 hintereinander aufgereiht sind. Auf diese Weise können sehr viele verschiedene Gebrauchspositionen erreicht werden.

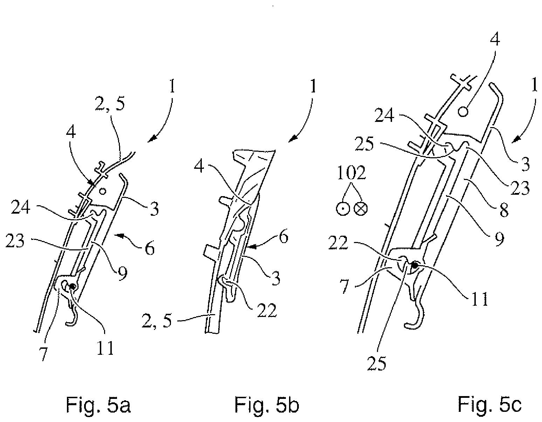

In **Figuren 5a, 5b und 5c** sind schematische Ansichten eines Ausstattungsteils 1 gemäß einer beispielhaften dritten Ausführungsform der vorliegenden Erfindung dargestellt. Die dritte Ausführungsform gleicht ebenfalls im Wesentlichen der ersten Ausführungsform, wobei im Unterschied das Ausstattungsteil 1 gemäß der dritten Ausführungsform vorzugsweise nur eine Raste 14 aufweist, welche mit dem einen Gegenrastelement 16 in der Gebrauchsposition verrastet, und dass der Schieber 7 eine als Steuerkurve fungierende Funktionskurve 22 umfasst, in welcher der zweite Bereich 13 des Halteelements 11 gelagert ist. Der Schieber 7 ist demnach nicht nur rotatorisch, sondern auch translatorisch relativ zum zweiten Bereich 13 verschiebbar. Ferner weist auch jedes Wandelement 8 der Schienenanordnung 6 jeweils eine als Steuerkurve fungierende weitere Funktionskurve 23 auf, wobei die Wandung des Führungslanglochs 9 hierfür mit einer Aussparung 24 versehen ist, die auf einer dem Klappelement 3 abgewandten und in der Nichtgebrauchsposition der Rückenlehne 5 zugewandten Seite des Führungslanglochs 9 ausgebildet ist.

In Figuren 5a, 5b und 5c ist das Klappelement 3 in der Nichtgebrauchsposition angeordnet, so dass sich das Klappelement 4 im Wesentlichen parallel zur Rückenlehne 5 erstreckt. Wenn nun das Klappelement 3 von einem Fahrzeuginsassen in Richtung einer ersten Gebrauchsposition verschwenkt wird, gleitet der Schieber 7 in Richtung des zweiten Endes 18 der Schienenanordnung 6 und das Gegenrastelement 16 des Schiebers 7 verrastet mit der einen Raste 14 (auch als Funktionsstellung bezeichnet). Der Schieber 7 ist somit am zweiten Ende 18 fixiert. Die Funktionskurve 22 und die weitere Funktionskurve 23 sind entlang der Querrichtung 102 dann genau deckungsgleich. Der zweite Bereich 13 des Halteelements 11 rutscht während dieser Bewegung entlang einer dem Klappelement 3 abgewandten Seite des Führungslanglochs 9. Wenn das Halteelement 11 und der Schieber 7 das zweite Ende 18 erreichen, wird der zweite Bereich 13 daher in die Aussparung 24 hinein bewegt. Das Klappelement 3 wird in einer ersten Gebrauchsposition mit einem ersten Winkel gegenüber der Rückenlehne 5 vom Halteelement 11 abgestützt, wobei sich der zweite Bereich 13 in der ersten Gebrauchsposition an einem in die Funktionskurven 22, 23 vorstehenden Fortsatz 25 abstützt. Wenn der Fahrzeuginsasse das Klappelement 3 aus der ersten Gebrauchsposition leicht anhebt und wieder loslässt rutscht der zweite Bereich 13 über den Fortsatz 25 und liegt anschließend - wie bei der ersten Ausführungsform - an den Endanschlägen 19 der Führungslanglöcher 9 an. Das Klappelement 3 wird dann von dem Halteelement 11 abgestützt und befindet sich in einer zweiten Gebrauchsposition. Der Winkel zwischen dem Klappelement 3 und der Rückenlehne 5 unterschiedet sich in der zweiten Gebrauchsposition jedoch von der ersten Gebrauchsposition, so dass eine etwaige Neigungsverstellung der Rückenlehne 3 kompensiert und das Klappelement 3 in einer horizontalen Ausrichtung fixiert werden kann. Denkbar ist, dass die Funktionskurven mit einer Mehrzahl solcher Rastpositionen für den zweiten Bereich 13 des Halteelements 11 versehen sind, so dass mehr als zwei Gebrauchspositionen realisiert werden können. Insbesondere weisen Führungslanglöcher 9 hierfür eine Mehrzahl von Aussparungen 24 auf.

### BEZUGSZEICHENLISTE

- 1: Ausstattungsteil
- 2: Fahrzeugsitz
- 3: Klappelement
- 4: Scharniere
- 5: Rückenlehne
- 6: Schienenanordnung
- 7: Schieber
- 8: Wandelemente
- 9: Führungslanglöcher
- 10: Erster Bereich des Halteelements
- 11: Halteelement
- 12: Gelenk
- 13: Zweiter Bereich des Halteelements
- 14, 15, 21: Rasten
- 16, 16', 16", 16''': Gegenrastelement
- 17: Erstes Ende der Schienenanordnung
- 18: Zweites Ende der Schienenanordnung
- 19: Endanschläge
- 20: Rampenbereich
- 22: Funktionskurve
- 23: Weitere Funktionskurve
- 24: Aussparung
- 25: Fortsatz
- 100: Horizontale Ebene
- 101: Haupterstreckungsrichtung
- 102: Querrichtung

## Patentansprüche

1. Ausstattungsteil (1) für einen Fahrzeugsitz (2) aufweisend ein an einer Rückenlehne des Fahrzeugsitzes drehbar befestigtes Klappelement (3), welches zwischen einer im Wesentlichen horizontalen Gebrauchsposition und einer Nichtgebrauchsposition verschwenkbar ist, und ein Halteelement (11) zur Arretierung des Klappelements (3) in der Gebrauchsposition, wobei ein erster Bereich (10) des Halteelements (11) drehbar an der Rückenlehne (5) befestigt ist und wobei ein zweiter Bereich (13) des Halteelements (11) drehbar an einem Schieber (7) befestigt ist, welcher in einer Schienenanordnung (6) des Klappelements (3) verschiebbar gelagert ist und mittels eines Befestigungselements relativ zur Schienenanordnung (6) fixierbar ist, **dadurch gekennzeichnet, dass** das Ausstattungsteil (1) eine Mehrzahl von Befestigungselementen zur Arretierung des Klappelements (3) in einer Mehrzahl von Gebrauchspositionen aufweist, wobei die Mehrzahl von Befestigungselementen eine Mehrzahl von Rasten (14, 15, 21) umfassen, wobei eine jede Raste (14, 15, 21) zum Verrasten mit dem Schieber (7) in einer der Mehrzahl von Gebrauchspositionen vorgesehen ist, wobei der Schieber (7) wenigstens ein dem Klappelement (3) zugewandtes Gegenrastelement (16) aufweist, welches zum wahlweisen Verrasten mit einer der Rasten (14, 15, 21) konfiguriert ist und wobei,
dadurch, dass wenigstens eine erste Raste (14) und eine zweite Raste (15) entlang einer zur Haupterstreckungsrichtung (101) senkrechten Querrichtung (102) zueinander versetzt sind, und der Schieber (7) wenigstens ein erstes Gegenrastelement (16') und ein zweites Gegenrastelement (16") aufweist, welche entlang der Querrichtung (102) zueinander versetzt sind, und
die erste und die zweite Raste (14, 15) und/oder das erste und das zweite Gegenrastelement (16', 16") entlang der Haupterstreckungsrichtung (101) zueinander versetzt sind,
verschiedene Rastpositionen bereitgestellt werden, die näher aneinander liegen und weniger weit voneinander beabstandet sind, um auch kleine Winkelkorrekturen in der Ausrichtung des Klappelements durchführen zu können.

2. Ausstattungsteil (1) nach Anspruch 1, wobei die Rasten (14, 15, 21) jeweils an einer der Schienenanordnung (6) zugewandten Seite des Klappelements (3) ausgebildet ist und/oder wobei die Rasten (14, 15, 21) entlang einer Haupterstreckungsrichtung (101) der Schienenanordnung (6) aufgereiht sind.

3. Ausstattungsteil (1) nach dem Oberbegriff des Anspruchs 1 oder nach einem der vorhergehenden Ansprüche, wobei der Schieber (7) eine Funktionskurve (22) aufweist, in welcher der zweite Bereich (13) des Halteelements (11) derart geführt ist, dass der zweite Bereich (13) in wenigstens zwei verschiedenen Positionen relativ zum Schieber (7) zur Arretierung des Klappelements (3) in wenigstens zwei Gebrauchspositionen fixierbar ist.

4. Ausstattungsteil (1) nach Anspruch 3, wobei die Schienenanordnung (6) eine weitere Funktionskurve (23) umfasst, welche im Wesentlichen deckungsgleich mit der Funktionskurve (22) angeordnet ist, wenn der Schieber (7) eine Funktionsstellung relativ zur Schienenanordnung (6) eingenommen hat, wobei in der Funktionsstellung vorzugsweise eine Raste (14) des Klappelements (3) mit einem Gegenrastelement (16) des Schiebers verrastet ist und das Klappelement (3) im Wesentlichen horizontal angeordnet ist.

5. Ausstattungsteil (1) nach einem der Ansprüche 3 oder 4, wobei die Schienenanordnung (6) eine sich entlang der Haupterstreckungsrichtung (101) erstreckende Langlochführung (9) aufweist, in welcher ein Führungsbolzen des Schiebers (7) und/oder das mit dem Schieber (7) verbundene Halteelement (11) verschiebbar geführt ist, wobei die Langlochführung (9) in einem Endbereich wenigstens eine Aussparung (24) zur Ausbildung der Funktionskurve (22) aufweist.

6. Ausstattungsteil (1) nach einem der vorhergehenden Ansprüche, wobei das Halteelement (11) als Drahtbügel ausgebildet ist und/oder dass das Klappelement (3) eine Tischplatte umfasst.

7. Fahrzeugsitz (2) aufweisend ein Ausstattungsteil (1) nach einem der vorhergehenden Ansprüche.

## Claims

1. Fitting part (1) for a vehicle seat (2), comprising a flap element (3) which is rotatably secured to a backrest of the vehicle seat and which can be pivoted between a substantially horizontal use position and a non-use position, and a retainer element (11) for locking the flap element (3) in the use position, wherein a first region (10) of the retainer element (11) is rotatably secured to the backrest (5), and wherein a second region (13) of the retainer element (11) is rotatably secured to a slide (7) which is slidably mounted in a rail arrangement (6) of the flap element (3) and can be fixed relative to the rail arrangement (6) by means of a securing element, **characterized in that** the fitting part (1) has a plurality of securing elements for locking the flap element (3) in a plurality of use positions, wherein the plurality of securing elements comprise a plurality of detents (14, 15, 21), wherein each detent (14, 15, 21) is provided for latching with the slide (7) in one of the plurality of use positions, wherein the slide (7) has at least one opposing detent element (16) which faces the flap element (3) and is configured to optionally latch with one of the detents (14, 15, 21) and wherein, due to the fact that at least a first detent (14) and a second detent (15) are offset with respect to one another in a transverse direction (102) which is perpendicular to the direction (101) of main extent, and the slide (7) has at least a first opposing detent element (16') and a second opposing detent element (16") which are offset with respect to one another in the transverse direction (102), and the first and the second detents (14, 15) and/or the first and the second opposing detent elements (16', 16") are offset with respect to one another in the direction (101) of main extent, and various latching positions are made available which lie relatively close to one another and are spaced apart less far from one another in order to be able to carry out even small angular corrections in the orientation of the flap element.

2. Fitting part (1) according to Claim 1, wherein the detents (14, 15, 21) are each formed on a side of the flap element (3) facing the rail arrangement (6), and/or wherein the detents (14, 15, 21) are arranged in a row in a direction (101) of main extent of the rail arrangement (6).

3. Fitting part (1) according to the preamble of Claim 1 or according to one of the preceding claims, wherein the slide (7) has a functional cam (22) in which the second region (13) of the retainer element (11) is guided in such a way that the second region (13) can be fixed in at least two different positions relative to the slide (7) in order to lock the flap element (3) in at least two use positions.

4. Fitting part (1) according to Claim 3, wherein the rail arrangement (6) comprises a further functional cam (23) which is arranged essentially congruently with the functional cam (22) when the slide (7) has assumed a functional position relative to the rail arrangement (6), wherein in the functional position preferably one detent (14) of the flap element (3) is latched to an opposing detent element (16) of the slide, and the flap element (3) is arranged substantially horizontally.

5. Fitting part (1) according to one of Claims 3 or 4, wherein the rail arrangement (6) has an elongate hole guide (9) which extends in the direction (101) of main extent and in which a guide bolt of the slide (7) and/or the retainer element (11) which is connected to the slide (7) is displaceably guided, wherein the elongate hole guide (9) has in an end region at least one cutout (24) for forming the functional cam (22).

6. Fitting part (1) according to one of the preceding claims, wherein the retainer element (11) is embodied as a wire clip, and/or in that the flap element (3) comprises a tabletop.

7. Vehicle seat (2) comprising a fitting part (1) according to one of the preceding claims.

## Revendications

1. Pièce d'équipement (1) pour un siège de véhicule (2) présentant un élément rabattable (3) fixé de façon rotative à un dossier du siège de véhicule, qui peut pivoter entre une position d'utilisation essentiellement horizontale et une position de non-utilisation, et un élément de maintien (11) pour caler l'élément rabattable (3) dans la position d'utilisation, dans laquelle une première région (10) de l'élément de maintien (11) est fixée de façon rotative au dossier (5) et dans laquelle une seconde région (13) de l'élément de maintien (11) est fixée de façon rotative à un curseur (7), qui est monté de façon coulissante dans un dispositif de rail (6) de l'élément rabattable (3) et qui peut être fixé par rapport au dispositif de rail (6) au moyen d'un élément de fixation, **caractérisée en ce que** la pièce d'équipement (1) présente une multiplicité d'éléments de fixation permettant de caler l'élément rabattable (3) dans une multiplicité de positions d'utilisation, dans laquelle la multiplicité d'éléments de fixation comprend une multiplicité de crans (14, 15, 21), dans laquelle chaque cran (14, 15, 21) est prévu pour se verrouiller avec le curseur (7) dans une de la multiplicité de positions d'utilisation, dans laquelle le curseur (7) présente au moins un élément d'encliquetage opposé (16) tourné vers l'élément rabattable (3), qui est configuré pour l'encliquetage au choix avec un des crans (14, 15, 21) et dans laquelle, du fait qu'au moins un premier cran (14) et un second cran (15) sont décalés l'un par rapport à l'autre le long d'une direction transversale (102) perpendiculaire à la direction d'extension principale (101), et que le curseur (7) présente au moins un premier élément d'encliquetage opposé (16') et un second élément d'encliquetage opposé (16"), qui sont décalés l'un par rapport à l'autre le long de la direction transversale (102), et que le premier et le second crans (14, 15) et/ou le premier et le second éléments d'encliquetage opposés (16', 16") sont décalés l'un par rapport à l'autre le long de la direction d'extension principale (101), on procure différentes positions d'encliquetage, qui sont situées plus près l'une de l'autre et qui sont moins éloignées l'une de l'autre, pour pouvoir effectuer des corrections angulaires même petites dans l'orientation de l'élément rabattable.

2. Pièce d'équipement (1) selon la revendication 1, dans laquelle les crans (14, 15, 21) sont formés respectivement sur un côté de l'élément rabattable (3) tourné vers le dispositif de rail (6) et/ou dans laquelle les crans (14, 15, 21) sont alignés le long de la direction d'extension principale (101) du dispositif de rail (6).

3. Pièce d'équipement (1) selon le préambule de la revendication 1 ou selon l'une quelconque des revendications précédentes, dans laquelle le curseur (7) présente une courbe fonctionnelle (22), dans laquelle la seconde région (13) de l'élément de maintien (11) est guidée de telle manière que la seconde région (13) puisse être fixée dans au moins deux positions différentes par rapport au curseur (7) afin de caler l'élément rabattable (3) dans au moins deux positions d'utilisation.

4. Pièce d'équipement (1) selon la revendication 3, dans laquelle le dispositif de rail (6) comprend une autre courbe fonctionnelle (23), qui recouvre essentiellement la courbe fonctionnelle (22), lorsque le curseur (7) a atteint une position fonctionnelle par rapport au dispositif de rail (6), dans laquelle dans la position fonctionnelle de préférence un cran (14) de l'élément rabattable (3) est encliqueté avec un élément d'encliquetage opposé (16) du curseur et l'élément rabattable (3) est disposé essentiellement en position horizontale.

5. Pièce d'équipement (1) selon une des revendications 3 ou 4, dans laquelle le dispositif de rail (6) présente un trou oblong de guidage (9) s'étendant le long de la direction d'extension principale (101), dans lequel un boulon de guidage du curseur (7) et/ou l'élément de maintien (11) relié au curseur (7) est guidé de façon coulissante, dans laquelle le trou oblong de guidage (9) présente dans une région d'extrémité au moins une découpe (24) pour la formation de la courbe fonctionnelle (22).

6. Pièce d'équipement (1) selon l'une quelconque des revendications précédentes, dans laquelle l'élément de maintien (11) est formé par un étrier en fil et/ou en ce que l'élément rabattable (3) comprend une tablette.

7. Siège de véhicule (2) présentant une pièce d'équipement (1) selon l'une quelconque des revendications précédentes.
